**Europäisches Patentamt**

**European Patent Office**

**Office européen des brevets**

(19)

(11) Veröffentlichungsnummer: **0 263 998 B1**

## (12) EUROPÄISCHE PATENTSCHRIFT

(45) Veröffentlichungstag der Patentschrift: **22.07.92**

(21) Anmeldenummer: **87113811.1**

(22) Anmeldetag: **22.09.87**

(51) Int. Cl.5: **G01C 19/42**, F41G 7/22

(54) **Vorrichtung zur Messung der Rollrate oder Rollage eines Flugkörpers.**

(30) Priorität: **08.10.86 DE 3634192**

(43) Veröffentlichungstag der Anmeldung:
**20.04.88 Patentblatt 88/16**

(45) Bekanntmachung des Hinweises auf die
Patenterteilung:
**22.07.92 Patentblatt 92/30**

(84) Benannte Vertragsstaaten:
**DE FR GB IT NL SE**

(56) Entgegenhaltungen:
**US-A- 4 277 039**
**US-A- 4 542 870**

(73) Patentinhaber: **Bodenseewerk Gerätetechnik GmbH**
**Alte Nussdorfer Strasse 15 Postfach 1120**
**W-7770 Überlingen/Bodensee(DE)**

(72) Erfinder: **Schwarzkopf, Gerhart, Dr.**
**Höriweg 6**
**W-7772 Uhldingen-Mühlhofen 1(DE)**
Erfinder: **Dulat, Bernd**
**Primelweg 5**
**W-7770 Überlingen/Bodensee(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

**Beschreibung**

Die Erfindung betrifft eine Vorrichtung zur Messung der Rollrate oder Rollage eines Flugkörpers, der um seine Rollachse rotiert, enthaltend

(a) einen in einem Suchkopf des Flugkörpers angeordneten Lagekreisel und

(b) Mittel zur Anregung des Lagekreisels zur Nutation mit seiner natürlichen Nutationsfrequenz im inertialen Raum, und

(c) Mittel zur Erfassung der Nutationsfrequenz ($f_N$) des Lagekreisels in bezug auf den Flugkörper.

Durch die US-A-4 277 039 ist es bekannt, den Lagekreisel des Suchkopfes zu Nutationsbewegungen mit definiertem öffnungswinkel anzuregen, um ein Gesichtsfeld mit einer bestimmten Abtastbewegung abzutasten.

Die US-A-4 542 870 bezieht sich auf einen Flugkörper, dem eine Rollbewegung erteilt wird mit einem flugkörperfesten Suchersystem. Bei der Proportionalnavigation wird ein Kollisionskurs dadurch gesteuert, daß der Vektor der Sichtlinie zu einem Ziel raumfest gehalten wird. Bei einem flugkörperfesten Sucher wird jedoch nicht der raumfeste Sichtlinienwinkel erhalten sondern ein Sichtlinienwinkel, der auf eine Flugkörperlängsachse bezogen ist. Aus diesem Grunde enthält der Flugkörper einen Wendekreisel der die Drehgeschwindigkeit der Flugkörperlängsachse im Raum liefert. Zu dem differenzierten, flugkörperbezogenen Sichtlinienwinkel wird der von dem Wendekreisel gelieferte Winkel hinzuaddiert. Das liefert die Änderung der Sichtlinie im inertialen Raum. Wenn die Lenkung so erfolgt, daß diese Änderung konstant bleibt, folgt der Flugkörper einem Kollisionskurs.

Bei Flugkörpern, die um ihre Rollachse rotieren, ist es erforderlich, die Rollage oder jedenfalls die Rollgeschwindigkeit zu bestimmen. Nur dann kann ein von einem Sucher geliefertes Gesichtsfeldbild in einem gegenüber dem inertialen Raum feststehenden Bezugssystem ausgewertet werden. Nur dann ist auch die richtige Aufschaltung der Information des Suchkopfes auf die Lenkung des Flugkörpers gewährleistet. Es ist bekannt, diese Informationen durch Verwendung eines speziellen Rollkreisels oder durch Rollratensensoren (Wendekreisel ) zu gewinnen. Dies erfordert jedoch wenigstens einen zusätzlichen Kreisel und damit erhöhten Aufwand.

Der Erfindung liegt die Aufgabe zugrunde, die Rollgeschwindigkeit eines rotierenden, mit einem Suchkopf versehenden Flugkörpers allein aus den Signalen des Suchkopfes zu bestimmen.

Erfindungsgemäß wird diese Aufgabe gelöst durch

(d) Mittel zur Erfassung der Umdrehungsfrequenz ($f_K$) des Lagekreisels in bezug auf den Flugkörper,

(e) Mittel zur Erzeugung eines die Rollrate oder Rollage des Flugkörpers wiedergebenden Signals aus der Subtraktion der von den besagten Mitteln erhaltenen, mit kreiselabhängigen Faktoren multiplizierten Umdrehungs- und Nutationsfrequenzen ($f_K$ bzw. $f_N$).

Es wird dabei die Tatsache ausgenutzt, daß bei einem Lagerkreisel zwischen der inertialen Nutationsfrequenz $f_N^i$, d. h. der gegenüber dem inertialen Raum gemessenen Nutationsfrequenz, und der inertialen Umdrehungsfrequenz $f_K^i$ ein proportionaler Zusammenhang besteht. Ist mit A das Trägheitsmoment um die Rotationsachse des Lagekreisels und mit B das Trägheitsmoment um eine zu der Rotationsachse senkrechte Achse bezeichnet, dann ist

$$f_N^{\,i} = \tfrac{A}{B}\, f_K^{\,i} \qquad (1)$$

Werden die Nutations- und Umdrehungsfrequenzen in dem Flugkörper gemessen, der gegenüber dem inertialen Raum mit einer Frequenz f um die Rollachse umläuft, dann gilt

$$f_N^{\,i} = f_N + f \qquad (2)$$
$$f_K^{\,i} = f_K + f \,, \qquad (3)$$

wobei $f_N$ und $f_K$ die flugkörperfesten Nutations- bzw. Umdrehungsfrequenzen sind. Daraus folgt

$$f \;=\; \frac{f_N - K\,f_K}{K - 1} \qquad\qquad (4)\,,$$

wenn

$$K = A/B \qquad (5)$$

das Verhältnis der Trägheitsmomente ist. Durch Subtraktion der im Flugkörper gemessenen Nutations- und Umdrehungsfrequenzen, jede multipliziert mit einem geeigneten, kreiselabhängigen Faktor kann somit aus Signalen des Suchkopfes allein die Rollgeschwindigkeit des Flugkörpers bestimmt werden.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

Fig. 1     zeigt eine schematische Darstellung eines Lagekreisels mit Winkelsensoren, Nutationsanregung und Rollmeßschaltung.

Fig. 2     ist ein Blockschaltbild der Anordnung von Fig.1 mit Einzelheiten der Rollmeßschaltung zur Messung der Rollfrequenz.

Fig. 3     zeigt eine Abwandlung der Anordnung von Fig.2 zur Messung der Rollage.

Mit 10 ist ein Lagekreisel in einem Suchkopf eines Flugkörpers bezeichnet. Der Lagekreisel 10 enthält einen Kreiselrotor, der um eine Drallachse 12 rotiert. Die Drehbewegung des Kreiselrotors um die Drallachse 12 wird durch einen Winkelsensor 14 abgegriffen, wie durch die gestrichelte Linie 16 angedeutet ist. Der Lagekreisel 10 ist relativ zu der Zelle des Flugkörpers um eine Nickachse 18 und eine Gierachse 20 verdrehbar. Es ist eine Winkelsensoranordnung 22 vorgesehen, welche auf die Bewegungen des Lagekreisels 10 um die Nick- und Gierachsen 18 bzw. 20 anspricht, wie durch die gestrichelten Linien 24 bzw. 26 angedeutet ist. Die Signale der Winkelsensoranordnung 22 sind Wechselspannungen mit der Frequenz $f_N$ der im flugkörperfesten System beobachteten Nutation des Lagekreisels 10. Sie sind auf eine Schaltung 28 geschaltet, welche Signale zur Anregung einer definierten Nutationsbewegung des Lagekreisels 10 erzeugt. Diese Signale sind auf einen Präzessionsmomenterzeuger 30 geschaltet, welcher die Nutationsbewegung des Lagekreisels 10 einleitet.

Diese Anordnung dient zugleich der Erzeugung einer bestimmten Bewegung des Lagekreisels 10 für die Gesichtsfeldabtastung. Sie entspricht insofern im wesentlichen der Anordnung nach der US-A-4 277 039.

Es werden nun das Signal des Winkelsensors 14, welches die Umdrehungsfrequenz $f_K$ des Lagekreisels 10 um seine Drallachse 12 wiedergibt, sowie ein Signal mit der Nutationsfrequenz $f_N$ zusätzlich auf eine Rollmeßschaltung 32 gegeben. die an einem Ausgang 34 z.B. die Rollrate liefert. Die Umdrehungsfrequenz $f_K$ ist wie die gemessene Nutationsfrequenz $f_N$ die Frequenz, die in dem flugkörperfesten System beobachtet wird.

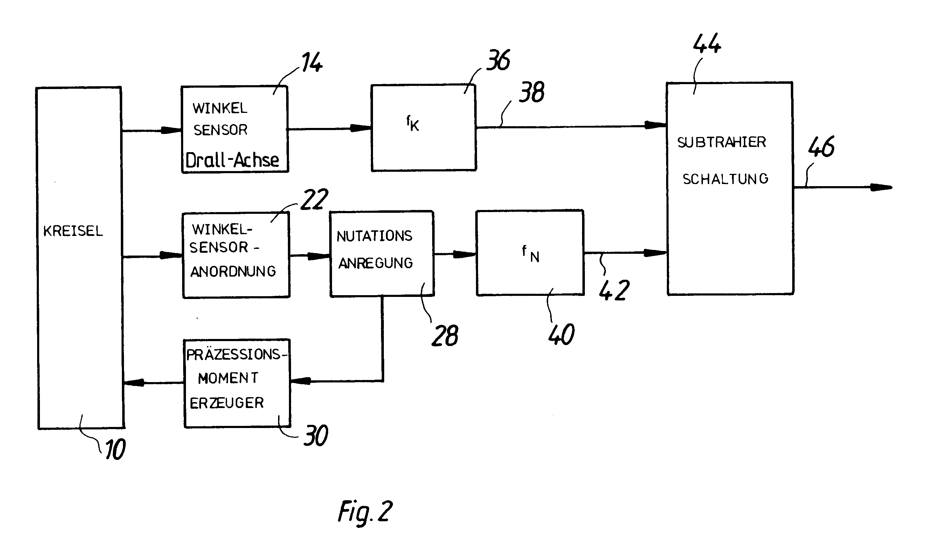

Die Rollmeßschaltung 32 ist in Fig.2 in einem Blockschaltbild dargestellt.

In Fig.2 ist wieder mit 10 der Lagekreisel bezeichnet, an welchem durch einen Winkelsensor 14 ein Signal mit der Umdrehungsfrequenz $f_K$ des Lagekreisels 10 im flugkörperfesten System abgegriffen wird. Eine Schaltung 36 liefert ein diese Umdrehungsfrequenz $f_K$ wiedergebendes analoges Signal an einem Ausgang 38.

Diese Schaltung 36 kann - in bekannter und daher nicht näher dargestellter Weise - zur Regelung der Umdrehungsfrequenz des Lagekreisels 10 auf einen vorgegebenen Wert verwendet werden.

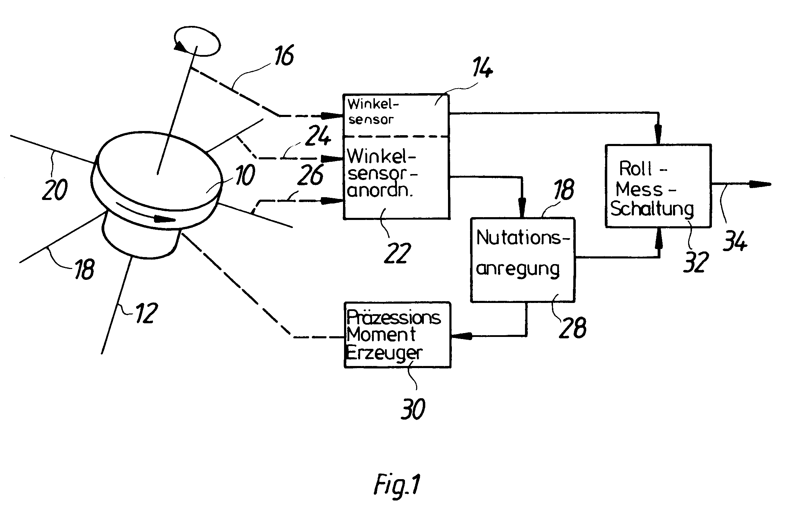

Mit 22 ist wieder die Winkelsensoranordnung für die Bewegungen des Lagekreisels 10 um die Nick- und Gierachsen 18 bzw. 20 bezeichnet. Die Winkelsensoranordnung 22 liefert Signale mit der Nutationsfrequenz $f_N$ . Diese beaufschlagen, wie im Zusammenhang mit Fig.1 erläutert, die Schaltung 28, welche wiederum den Präzessionsmomenterzeuger 30 ansteuert. Die Schaltung 28 liefert ein Signal mit der Nutationsfrequenz $f_N$ an eine Schaltung 40 zur Nutationsfrequenzbestimmung. Die Schaltung 40 liefert an einem Ausgang 42 ein analoges Signal, das die Nutationsfrequnez $f_N$ wiedergibt. Die Signale an den Ausgängen 38 und 42 sind auf eine Subtrahierschaltung 44 geschaltet, welche eine Linearkombination

$$f = k_1 f_N - k_2 f_K \qquad (6)$$

so bildet, daß das an einem Ausgang 46 erhaltene Ausgangssignal entsprechend Gleichung (4) die Rollfrequenz wiedergibt.

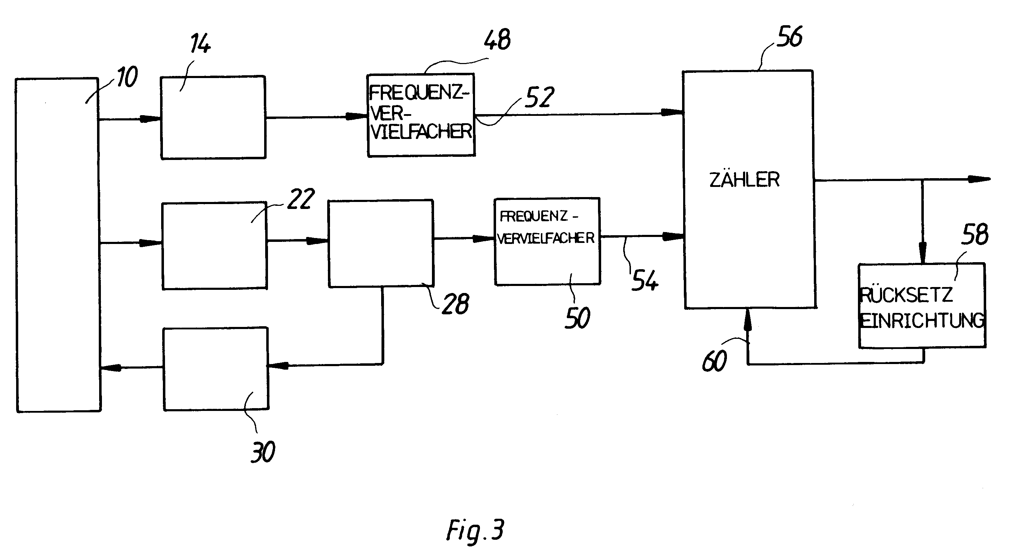

In Fig.3 ist eine abgewandelte Ausführung dargestellt, welche in digitaler Form unmittelbar den Rollwinkel liefert. Entsprechende Teile sind in Fig.3 mit den gleichen Bezugszeichen versehen wie in Fig.2.

Bei der Ausführung nach Fig.3 ist das Signal mit der Umdrehungsfrequenz $f_K$ von dem Winkelsensor 14 auf einen Frequenzvervielfacher 48 geschaltet, welcher die Frequenz $f_K$ um einen Faktor $k_4$ erhöht. In entsprechender Weise ist das Signal mit der Nutationsfrequenz $f_N$ von der Schaltung 28 auf einen Frequenzvervielfacher 50 geschaltet, welcher die Frequenz $f_N$ um einen Faktor $k_5$ erhöht. Die Ausgangssignalfolgen an den Ausgängen 52 und 54 der frequenzvervielfacher 48 bzw. 50 sind auf die "Aufwärts"-bzw. "Abwärts"-Zählereingänge einer subtrahierenden Zählerschaltung 56 geschaltet. Die Faktoren $k_4$ und $k_5$

sind so gewählt, daß der Ausgang des Zählers 56 dem Rollwinkel entspricht. Eine Rücksetzeinrichtung 58 vergleicht den Zählerstand mit einer Zahl $k_6$ , die einer vollen Umdrehung des Flugkörpers entspricht. Wenn der Zählerstand der Zählerschaltung 56 diesen Wert $k_6$ erreicht, wird die Zählerschaltung 56 von der Rücksetzeinrichtung 58 über einen Rücksetzeingang 60 auf null zurückgesetzt.

Die Anordnung nach Fig.3 arbeitet wie folgt:

Die Frequenz der Signalfolge am Ausgang 52 des Frequenzvervielfachers 48 ist das $k_4$ -fache der Umdrehungsfrequenz $f_K$ des Lagekreisels 10. Jedes Signal am Ausgang 52 entspricht also einer Drehung des Kreiselrotors um

$$\Delta \varphi_K = \frac{2\pi}{k_4} \cdot \qquad (7)$$

Ebenso ist die Frequenz der Signalfolge am Ausgang 54 des Frequenzvervielfachers 50 das $k_5$ -fache der Nutationsfrequenz $f_N$ . Jedes Signal am Ausgang 54 entspricht also einem Winkel

$$\Delta \varphi_N = \frac{2\pi}{k_5} \cdot \qquad (8)$$

Die beiden Signalfolgen werden der subtrahierenden Zählerschaltung 56 zugeführt. Dem Zählerstand $k_6$ soll eine volle Umdrehung des Flugkörpers um die Rollachse entsprechen. Wählt man

$$k_5 = \frac{k_6}{K-1} \qquad (9)$$

und

$$k_4 = k_5 \cdot K = \frac{k_6 \, K}{K-1} \qquad (10)$$

so ergibt sich als Änderung des Zählerstandes $\Delta N$ während einer Zeit T:

$$\Delta N = k_5 \, f_N T - k_4 \, f_K \, T$$
$$= \frac{k_6}{K-1} f_N T - \frac{k_6 \, K}{K-1} f_K T =$$
$$= k_6 \, T \frac{f_N - K \, f_K}{K-1} \qquad (11)$$

Setzt man den Bruchterm nach Gleichung (4) gleich f, dann wird:

$$\Delta N = k_6 \cdot f \cdot T \qquad (12)$$

Für eine volle Umdrehung wird

$$T = 1/f \cdot \qquad (13)$$

Es ist dann

$$\Delta N = k_6 \cdot \qquad (14)$$

Die Änderung $\Delta N$ des Zählerstandes ist somit proportional der Rollrate f und der Zeit T, somit also proportional dem Rollwinkel. Der Proportionalitätsfaktor ist so gewählt, daß eine volle Drehung des Flugkörpers um die Rollachse einer Änderung des Zählerstandes um $k_6$ entspricht. Jedesmal beim Zählerstand $k_6$ wird der Zähler 56 zurückgestellt. Der Zählerstand des Zählers 56 liefert daher als digitales Wort den jeweiligen Rollwinkel bezogen auf eine bestimmte Referenzebene.

**Patentansprüche**

1.  Vorrichtung in einem Flugkörper zur Messung von dessen Rollrate oder Rollage, enthaltend
    (a) einen in einem Suchkopf des Flugkörpers angeordneten Lagekreisel und
    (b) Mittel zur Anregung des Lagekreisels zur Nutation mit seiner natürlichen Nutationsfrequenz im inertialen Raum, und
    (c) Mittel zur Erfassung der Nutationsfrequenz ($f_N$) des Lagekreisels (10) in bezug auf den Flugkörper,
    **gekennzeichnet durch**
    (d) Mittel zur Erfassung der Umdrehungsfrequenz ($f_K$) des Lagekreisels (10) in bezug auf den Flugkörper,
    (e) Mittel zur Erzeugung eines die Rollrate oder Rollage des Flugkörpers wiedergebenden Signals aus der Subtraktion der von den besagten Mitteln erhaltenen, mit kreiselabhängigen Faktoren multiplizierten Umdrehungs- und Nutationsfrequenzen ($f_K$ bzw. $f_N$).

2.  Vorrichtung nach Anspruch 1, **dadurch gekennzeichnet, daß**
    (a) die Mittel zur Erfassung der Umlauffrequenz des Lagekreisels
    -   einen auf den Umlauf des Kreiselrotors um die Drallachse (12) ansprechenden Winkelsensor (14) und
    -   eine Schaltung (36) enthalten zur Bildung eines die flugkörperbezogene Umdrehungsfrequenz ($f_K$) wiedergebenden analogen Signals aus den Signalen des Winkelsensors (14),
    (b) die Mittel zur Erfassung der Nutationsfrequenz ($f_N$)
    -   eine Winkelsensoranordnung (22) zur Erfassung der Drehungen des Lagekreisels (10) um eine Nick-und/oder Gierachse (18 bzw. 20) und zur Lieferung von Signalen mit der Nutationsfrequenz ($f_N$) des Lagekreisels (10), sowie
    -   eine Schaltung (40) zur Bildung eines analogen Signals, das die flugkörperbezogene Nutationsfrequenz ($f_N$) wiedergibt, aus den Signalen der Winkelsensoranordnung (22),
    (c) eine Subtrahierschaltung (44) vorgesehen ist, die so ausgebildet ist, daß aus einer Linearkombination der beiden die Umdrehungsfrequenz ($f_K$) und die Nutationsfrequenz ($f_N$) wiedergebenden analogen Signale ein der Rollfrequenz entsprechendes Ausgangssignal gebildet wird.

3.  Vorrichtung nach Anspruch 2, **dadurch gekennzeichnet, daß** die Subtrahierschaltung (44) so ausgebildet ist, daß die Linearkombination der beiden Signale der Formel

$$k_1 \, f_N - k_2 \, f_K$$

    entspricht, wobei
    -   $k_1$ proportional 1/K und
    -   $k_2$ proportional K/K-1 und
    -   K das Verhältnis der Trägheitsmomente des Kreiselrotors um seine Drallachse (12) und um eine zur Drallachse senkrechte Achse ist.

4.  Vorrichtung nach Anspruch 1, **dadurch gekennzeichnet, daß**
    (a) die Mittel zur Erfassung der Umdrehungsfrequenz des Lagekreisels (10) einen auf den Umlauf des Kreiselrotors um die Drallachse (12) ansprechenden Winkelsensor enthalten,
    (b) ein erster Frequenzvervielfacher (48) vorgesehen ist, der dem Winkelsensor (14) zugeschaltet ist zur Lieferung eines Ausgangssignals mit einer Frequenz, die der mit einem ersten Faktor ($k_4$) multiplizierten flugkörperbezogenen Umdrehungsfrequenz ($f_K$) des Lagekreisels (10) entspricht,

(c) die Mittel zur Erfassung der Nutationsfrequenz eine Winkelsensoranordnung (22) enthalten zur Erfassung der Drehungen des Lagekreisels (10) um eine Nick-und/oder Gierachse (18 bzw. 20) zur Lieferung von Signalen mit der flugkörperbezogenen Nutationsfrequenz ($f_N$) des Lagekreisels (10),

(d) ein zweiter Frequenzvervielfacher (50) vorgesehen ist, der der Winkelsensoranordnung (22) zugeschaltet ist zur Lieferung eines Ausgangssignals mit einer Frequenz, die der mit einem zweiten Faktor ($k_5$) multiplizierten Nutationsfrequenz ($f_N$) entspricht,

(e) je einer der Frequenzvervielfacher (48,50) auf den "Aufwärts"-Zählereingang bzw. den "Abwärts"-Zählereingang einer subtrahierenden Zählerschaltung (56) geschaltet ist und

(f) die Zählerschaltung (56) bei einem vorgegebenen Zählerstand rücksetzbar ist,

(g) wobei

- die Faktoren ($k_4$, $k_5$) so gewählt sind, daß der Zählerstand proportional dem Rollwinkel wird und
- der besagte vorgegebene Zählerstand einer vollen Umdrehung des Flugkörpers um die Rollachse entsprechen wird.

**5.** Vorrichtung nach Anspruch 4, **dadurch gekennzeichnet, daß** sie so ausgebildet ist, daß

(a) der zweite Faktor ($k_5$) gleich dem besagten vorgegebenen Zählerstand ($k_6$) dividiert durch das um eins verminderte Verhältnis (K-1) des Trägheitsmomente des Kreiselrotors um seine Drallachse und eine zur Drallachse senkrechte Achse ist und

(b) der erste Faktor ($k_4$) gleich dem zweiten Faktor ($k_5$) multipliziert mit dem besagten Verhältnis (K) ist.

**Claims**

**1.** Device in a missile for measuring the missile roll rate or roll attitude, comprising

(a) an attitude gyro arranged in a seeker head of the missile and

(b) means for stimulating the attitude gyro to nutate at its natural nutation frequency in inertial space, and

(c) means for detecting the nutation frequency ($f_N$) of the attitude gyro (10) relative to the missile, characterised by

(d) means for detecting the rotation frequency ($f_K$) of the attitude gyro (10) relative to the missile,

(e) means for generating a signal representing the roll rate or roll attitude of the missile by subtraction of the rotation frequency and nutation frequency ($f_K$ and $f_N$, respectively) obtained by said means and multiplied by gyro-dependent factors.

**2.** Device according to claim 1, characterised in that

(a) the means for detecting the rotation frequency of the attitude gyro comprise

- an angle sensor (14) responding to the rotation of the gyro rotor about the spin axis (12) and
- a circuit (36) for forming an analog signal representing the missile-related rotation frequency ($f_K$), from the signals of the angle sensor (14),

(b) the means for detecting the nutation frequency ($f_N$) comprise

- an angle sensor arrangement (22) for detecting rotations of the attitude gyro (10) about a pitch axis and/or yaw axis (18 and 20, respectively) and for providing signals having the nutation frequency ($f_N$) of the attitude gyro (10), as well as
- a circuit (40) for forming an analog signal representing the missile-related nutation frequency, from the signals of the angle sensor arrangement (22),

(c) a subtraction circuit (44) is provided and designed such as to produce an output signal which corresponds to the roll frequency and which is formed from a linear combination of the two analog signals representing the rotation frequency ($f_K$) and the nutation frequency ($f_N$).

**3.** Device according to claim 2, characterised in that the subtraction circuit (44) is designed such that the linear combination of the two signals corresponds to the formula

$$k_1\, f_N - k_2\, f_K$$

wherein

- $k_1$ is proportional to 1/K and
- $k_2$ is proportional to K/K - 1 and

- K is the ratio of the moments of inertia of the gyro rotor about its spin axis (12) and about an axis perpendicular to the spin axis.

**4.** Device according to claim 1, characterised in that

(a) the means for detecting the rotation frequency of the attitude gyro (10) comprise an angle sensor which responds to the rotation of the gyro rotor about the spin axis (12),

(b) a first frequency multiplier (48) is provided which cooperates with the angle sensor (14) for providing an output signal of a frequency which corresponds to the missile-related rotation frequency ($f_K$) of the attitude gyro (10) multiplied by a first factor ($k_4$),

(c) the means for detecting the nutation frequency comprise an angle sensor arrangement (22) for detecting rotations of the attitude gyro (10) about a pitch axis and/or yaw axis (18 and 20, respectively) and providing signals having the missile-related nutation frequency ($f_N$) of the attitude gyro (10),

(d) a second frequency multiplier (50) is provided which cooperates with the angle sensor arrangement (22) for providing an output signal having a frequency which corresponds to the nutation frequency ($f_N$) multiplied by a second factor ($k_5$),

(e) the frequency multipliers (48, 50) are respectively connected to the "count-up" counter input and the "count-down" counter input of a subtracting counter circuit (56), and

(f) the counter circuit (56) is arranged to be reset at a predetermined counter reading,

(g) wherein

- the factors ($k_4$, $k_5$) are selected such that the counter reading becomes proportional to the roll angle, and

- said predetermined counter reading corresponds to a complete revolution of the missile about the roll axis.

**5.** Device according to claim 4, characterised in that the device is constructed such that

(a) the second factor ($k_5$) is equal to said predetermined counter reading ($k_6$) divided by the ratio decreased by one (K - 1) of the moments of inertia of the gyro rotor about its spin axis and an axis perpendicular to the spin axis, and

(b) the first factor ($k_4$) is equal to the second factor ($k_5$) multiplied by said ratio (K).


**Revendications**

**1.** Dispositif dans un missile, destiné à mesurer son taux de roulis et son assiette de roulis, comprenant

(a) un gyroscope d'assiette disposé dans une tête chercheuse du missile, et

(b) des moyens destinés à stimuler le gyroscope d'assiette à la nutation à sa fréquence de nutation naturelle dans l'espace inertiel, et

(c) des moyens destinés à détecter la fréquence de nutation ($f_N$) de l'assiette de gyroscope (10) par rapport au missile,

**caractérisé par le fait que**

(d) des moyens destinés à détecter la fréquence de rotation ($f_K$) du gyroscope d'assiette (10) par rapport au missile,

(e) des moyens destinés à engendrer un signal représentant le taux de roulis ou l'assiette de roulis du missile, à partir de la soustraction des fréquences de rotation et de nutation ($f_K$ et $f_N$) obtenues par lesdits moyens et multipliées par des facteurs dépendant du gyroscope.

**2.** Dispositif selon la revendication 1, **caractérisé par le fait que**

(a) les moyens destinés à détecter la fréquence de rotation du gyroscope d'assiette comprennent

- un détecteur angulaire (14) répondant à la rotation du rotor de gyroscope autour de l'axe de spin (12), et

- un circuit (36) destiné à former un signal analogique représentant la fréquence de rotation ($f_K$) par rapport au missile à partir des signaux du détecteur angulaire (14),

(b) les moyens destinés à détecter la fréquence de nutation ($f_N$) comprennent

- une disposition de détecteurs angulaires (22) destinée à détecter la rotation du gyroscope d'assiette (10) autour d'un axe d'inclinaison et/ou d'embardée (18 et 20) et destinée à fournir des signaux à la fréquence de nutation ($f_N$) du gyroscope d'assiette (10), ainsi que

- un circuit (40) destiné à former un signal analogique représentant la fréquence de nutation ($f_N$) par rapport au missile à partir des signaux de la disposition de détecteurs angulaires (22),

(c) on a prévu un circuit de soustraction (44) formé de sorte qu'un signal de sortie correspondant à la fréquence de roulis est formé à partir d'une combinaison linéaire des deux signaux analogiques représentant la fréquence de rotation ($f_K$) et la fréquence de nutation ($f_N$).

3. Dispositif selon la revendication 2, **caractérisé par le fait que** le circuit de soustraction (44) est formé de sorte que la combinaison linéaire des deux signaux correspond à la formule

$$k_1 f_N - k_2 f_K,$$

- $k_1$ étant proportionnel à 1/K et
- $k_2$ étant proportionnel à K/K-1 et
- K étant le rapport des moments d'inertie du rotor de gyroscope autour de l'axe de spin (12) et autour d'un axe perpendiculaire à l'axe de spin.

4. Dispositif selon la revendication 1, **caractérisé par le fait que**
(a) les moyens destinés à détecter la fréquence de rotation du gyroscope d'assiette (10) comprennent un détecteur angulaire répondant à la rotation du rotor de gyroscope autour de l'axe de spin (12),
(b) on a prévu un démultiplicateur de fréquence (48) appliqué au détecteur angulaire (14) afin de fournir un signal de sortie à une fréquence égale à la fréquence de rotation ($f_K$) du gyroscope d'assiette (10) par rapport au missile, multipliée par un premier facteur ($k_4$),
(c) les moyens destinés à détecter la fréquence de nutation comprennent une disposition de détecteurs angulaires (22) destinés à détecter la rotation du gyroscope d'assiette (10) autour d'un axe d'inclinaison et/ou d'embardée (18 et 20) afin de fournir des signaux à la fréquence de nutation ($f_N$) du gyroscope d'assiette (10) par rapport au missile,
(d) on a prévu un second démultiplicateur de fréquence (50) appliqué à la disposition de détecteurs angulaires (22) afin de fournir un signal de sortie à une fréquence égale à la fréquence de nutation ($f_N$) multipliée par un second facteur ($k_5$),
(e) l'un des démultiplicateurs de fréquence (48,50) à la fois est appliqué à l'entrée de compteur "ascendante" et à l'entrée de compteur "descendante" d'un circuit compteur de soustraction (56), et
(f) le circuit compteur (56) peut être remis en cas d'état de compteur prédéterminé,
(g) dans quel cas,
- les facteurs ($k_4$, $k_5$) sont choisis de sorte que l'état de compteur est proportionnel à l'angle de roulis, et
- ledit état de compteur prédéterminé correspondra à une rotation complète du missile autour de l'axe de roulis.

5. Dispositif selon la revendication 4, **caractérisé par le fait que**
(a) le second facteur ($k_5$) est égal à ledit état de compteur prédéterminé ($k_6$) divisé par le rapport moins un (k-1) des moments d'inertie du rotor de gyroscope autour de son axe de spin et d'un axe perpendiculaire à l'axe de spin, et
(b) le premier facteur ($k_4$) est égal au second facteur ($k_5$) multiplié par ledit rapport (K).

Fig.1

Winkelsensor 16

Winkelsensoranordn. 24

26

10

20

18

12

Nutationsanregung 18

Roll-
Mess-
Schaltung

34

32

28

Präzessions
Moment
Erzeuger

30

14

22

EP 0 263 998 B1

Fig.2

EP 0 263 998 B1

Fig.3